# EUROPEAN PATENT APPLICATION

(11) **EP 4 703 253 A1**
(43) Date of publication of application: **04.03.2026**
(21) Application number: 24275101.4
(22) Date of filing: 29.08.2024
(51) Int. Cl.: B63G 8/00, G05D 1/00

(54) **CONTROL SYSTEM FOR AUV**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a control system for an autonomous underwater vehicle, AUV. The control system comprises: a controller configured to operate: in a surface control mode to transmit periodic signals from a transmitter of the AUV, control the AUV to move based on the return signals when return signals are received via a receiver of the AUV, and activate an emergency stop function to stop the AUV when the return signals are absent, and in a sub-surface control mode to not transmit the periodic signals, de-activate the emergency stop function, and control the AUV to move based on the return signals received when operating in the surface control mode; and a switch to switch between the surface control mode and the sub-surface control mode.

## Description

### FIELD

The subject-matter of the present disclosure relates to control systems for autonomous underwater vehicles.

### BACKGROUND

Autonomous underwater vehicles (AUVs) may operate at an at or near surface depth, and then a sub-surface depth. In either case, the AUVs typically have a receiver for receiving a waypoint, and a sensor for guiding the AUV to the waypoint. The waypoints can be sent to the AUV using radio waves when at or near the surface, and using acoustic waves when at the sub-surface depth.

However, due to effects such as propellor noise, the signal to noise ratio of the acoustic waves may be insufficient.

It is an aim of the present invention to address such problems and improve on the prior art.

### SUMMARY

According to an aspect of the present disclosure, there is provided a control system for an autonomous underwater vehicle, AUV. The control system comprising: a controller configured to operate: in a surface control mode to transmit periodic signals from a transmitter of the AUV, control the AUV to move based on the return signals when return signals are received via a receiver of the AUV, and activate an emergency stop function to stop the AUV when the return signals are absent, and in a sub-surface control mode to not transmit the periodic signals, de-activate the emergency stop function, and control the AUV to move based on the return signals received when operating in the surface control mode; and a switch to switch between the surface control mode and the sub-surface control mode.

Advantageously, the control system is able to control the AUV sub-surface in spite of not being able to rely on communication using acoustic waves.

In an embodiment, the periodic signals are radio signals.

In an embodiment, the return signals include waypoints.

In an embodiment, in the surface mode, the controller is further configured to monitor images from a camera, the images showing a scene surrounding the AUV.

In an embodiment, in the surface mode, the controller being configured to control the AUV to move based on the return signals comprises the controller being configured to generate a trajectory for the AUV using the waypoints and the scene, and to control the AUV to move using the trajectory.

In an embodiment, the sensor is a SONAR transceiver configured to transmit SONAR pulses and receive return SONAR signals.

In an embodiment, in the sub-surface mode, the controller being configured to control the AUV to move based on the return signals received when operating in the surface control mode comprises the controller being configured to control the AUV to move according to a predefined path.

In an embodiment, the switch is configured to receive signal from a sensor of the AUV and switch between the surface controller and the sub-surface controller based on the signal received from the sensor.

In an embodiment, the sensor is a pressure sensor, wherein the switch is configured to switch from the surface control mode to the sub-surface control mode in response to pressure in the received signal equalling or exceeding a pressure threshold, and to switch from the sub-surface control mode to the surface control mode in response to pressure in the received signal being less than the pressure threshold.

In an embodiment, the switch is a manual switch.

In an embodiment, the control system further comprises a console controller configured to receive an activation signal, to override the controller in response to receiving the activation signal, receive a navigation signal from the receiver, and control the AUV to move based on the navigation signal.

In an embodiment, when overriding the controller when operating in the surface mode, the navigation signal and/or the activation signal, is a radio navigation signal.

In an embodiment, when overriding the controller when operating in the sub-surface mode, the navigation signal and/or the activation signal is an acoustic signal.

According to an aspect of the present disclosure, there is provided an autonomous underwater vehicle, comprising: a transmitter for transmitting periodic signals to a ground station; a receiver for receiving signals from the ground station; a sensor; an actuator for moving the AUV; and the control system of any preceding claim.

### BRIEF DESCRIPTION OF DRAWINGS

The subject-matter of the present disclosure is best described with reference to the accompanying figures, in which:
Figure 1 shows a schematic illustration of an AUV including a control system, according to at least one embodiment; and
Figure 2 shows a block diagram of a computer used to implement the control system.

### DESCRIPTION OF EMBODIMENTS

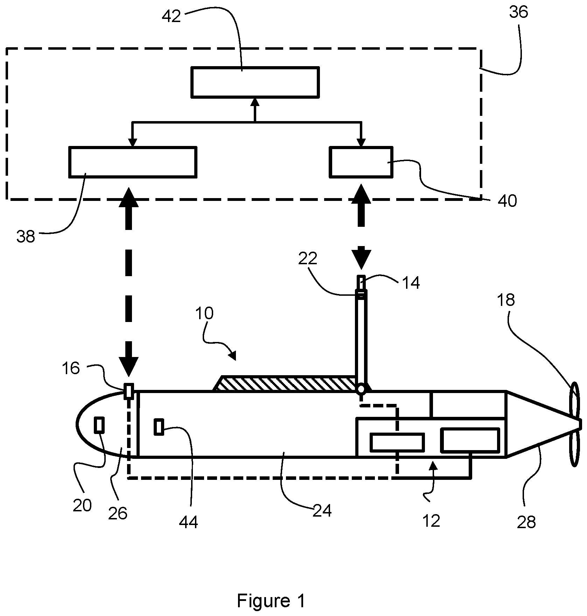

With reference to Figure 1, an AUV 10 comprises a control system 12, a first transceiver 14, a second transceiver 16, an actuator 18, a sensor 20, and an imaging sensor 22 (e.g. a camera). The AUV 10 includes a hull 24, a nose 26, and a tail 28.

The control system 12 may be provided in the hull 24.

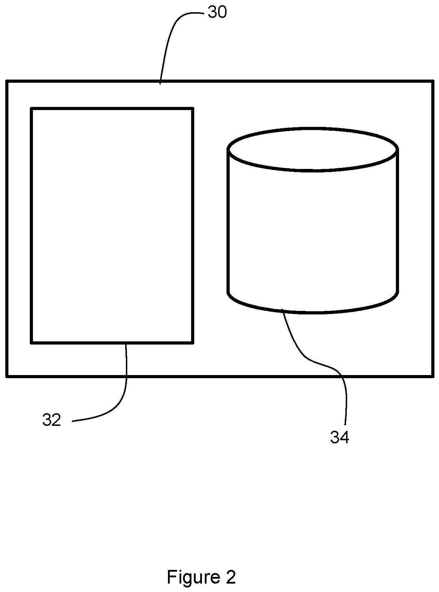

With reference to Figure 2, the AUV 10 includes a computer, or computer system 30. The computer 30 includes a processor 32 and storage 34. The storage 34 includes electronic data forming instructions stored thereon. The instructions provide the various functions of the control system 12 when executed by the processor 32. As explained below, the functions of the control system 12 include a surface controller, a sub-surface controller, a switch, etc.

The control system 12 thus includes a controller, a switch, and console controller. The controller may operate in a sub-surface mode, and in a surface mode.,.

The first and second transceivers 14, 16, each include a transmitter and a receiver. The transceivers 14, 16, communicate with a base station 36. The base station includes a first transceiver 38 and a second transceiver 40 and a controller 42. The first transceiver 14 of the AUV and the first transceiver 40of the base station 36 communicate using radio signals. The second transceiver 16 of the AUV 10 and the second transceiver 38 of the base station communicate using acoustic signals.

The surface controller is configured to transmit the periodic signals from a transmitter of the AUV, control the AUV to move based on the return signals when return signals are received via a receiver of the AUV, and activate an emergency stop function to stop the AUV when the return signals are absent.

The transmitter of the first transceiver 14 is used to transmit the periodic signals. The periodic signals are radio signals.

The return signals may include waypoints. A waypoint may be a point to which the AUV needs to navigate. The waypoint may be surface level or sub-surface level. In other words, the waypoints received by the controller operating in a surface mode can be used to navigate the AUV at surface level, and also may be recorded for navigating the AUV underwater when the controller is operating in a sub-surface mode.

The controller, when operating in the surface mode is further configured to monitor images from the camera. The images show a scene surrounding the AUV. The scene may includes other actors, including boats, rigs, etc. The scene also includes permanent features such as land, for example. Features in the images can be detected and identified using a machine learning model, for example. For instance, a you only look once (YOLO) algorithm may be employed for object detection.

The controller, when operating in the surface mode, being configured to control the AUV to move based on the return signals comprises the controller being configured to generate a trajectory for the AUV using the waypoints and the scene, including the detected objects. The trajectory may plot a course for the AUV to avoid the objects to reach the waypoint destination. The controller operating in the surface mode controls the AUV to move according to the trajectory.

The emergency stop function stops the AUV immediately. The controller, when operating in the surface mode, activates the emergency stop function when the return signals are absent. The absence may be the absence of a single return signal, or a predetermined number of return signals, or absence of return signals for a predetermined duration of time.

The controller, when operating in the sub-surface mode, configured to not transmit the periodic signals, de-activate the emergency stop function, monitor an environment surrounding the AUV using a sensor of the AUV, and control the AUV to move based on the monitored environment. Alternatively, instead of monitoring the environment surrounding the AUV using the sensor of the AUV, and controlling the AUV to move based on the monitored environment, there may be a predetermined path sub-surface that the AUV is programmed to follow. The predetermined path may be obtained in combination with the waypoints from the return signals when the controller is operating in the surface mode. The predetermined path works well because it is simple and has a comparatively low risk of an infraction, e.g. a collision, due to being sub-surface.

When the switch switches the control mode from the surface control mode to the sub-surface control mode, the periodic signals may be stopped. In the surface control mode, the controller may start transmitting the periodic signals again when the switch switches control from the sub-surface control mode to the surface control mode.

The sensor may be in the nose of the AUV. The sensor may be a SONAR transceiver configured to transmit SONAR pulses and receive return SONAR signals.

In the sub-surface control mode, the controller controlling the AUV to move based on the monitored environment may involve the controller being configured to construct a trajectory using the received return SONAR signals, and to control the AUV to move according to the trajectory. The return SONAR signals may detect underwater permanent features, such as a sea bed, a cliff face, etc., and also other actors such as other vessels and marine life.

The trajectory may be constructed to move the AUV whilst avoiding a collision with the permanent features and other actors.

in the sub-surface control mode, the controller being configured to construct a trajectory using the received return SONAR signals may involve the controller being configured to construct the trajectory using a most recent waypoint and the received return SONAR signals. The most recent waypoint may be a waypoint received by the surface controller prior to the switch switching control from the surface control mode to the sub-surface control mode.

De-activating the emergency stop function means that the AUV will continue moving along the trajectory.

There are different ways that the switch can be implemented.

The switch can be triggered automatically or manually. When using an automatic switch, the switch is configured to receive a signal from a sensor of the AUV. The sensor may be a pressure sensor 44. Then, the switch may switch between the surface control mode and the sub-surface control mode based on the signal received from the sensor.

More specifically, the switch is configured to switch from the surface control mode to the sub-surface control mode in response to pressure in the received signal equalling or exceeding a pressure threshold. The switch is also configured to switch from the sub-surface control mode to the surface control mode in response to pressure in the received signal being less than the pressure threshold. The pressure threshold may be set at a water pressure associated with a certain depth. The depth may be dictated by a height of the first transceiver 14 and geometry of the AUV. This is because the radio waves should be above the surface of the water to transmit and receive the radio waves.

Otherwise, the switch may be a manual switch. For example, a signal may be sent from either the first or second transceivers 38, 40, of the base station 36 to switch the vehicle from surface control to sub-surface control, and vice-versa.

The console controller may be configured to receive an activation signal, to override the controller when operating in either the surface control mode or the sub-surface control mode in response to receiving the activation signal, receive a navigation signal from the receiver, and to control the AUV to move based on the navigation signal. The navigation signal may come from either the first or second transceiver 38, 40, of the base station 36. In this way, when the AUV is at or near the surface, the navigation signal is a radio signal. The activation signal may also be a radio signal. When the AUV is sub-surface, i.e. the controller is operating in the sub-surface control mode, the navigation signal is an acoustic signal. Similarly, the activation signal is an acoustic signal.

## Claims

1. A control system for an autonomous underwater vehicle, AUV, the control system comprising:
a controller configured to operate:
in a surface control mode to transmit periodic signals from a transmitter of the AUV, control the AUV to move based on the return signals when return signals are received via a receiver of the AUV, and activate an emergency stop function to stop the AUV when the return signals are absent, and
in a sub-surface control mode to not transmit the periodic signals, de-activate the emergency stop function, and control the AUV to move based on the return signals received when operating in the surface control mode; and
a switch to switch between the surface control mode and the sub-surface control mode.

2. The control system of Claim 1, wherein the periodic signals are radio signals.

3. The control system of Claim 1 or Claim 2, wherein the return signals include waypoints.

4. The control system of Claim 3, wherein, in the surface mode, the controller is further configured to monitor images from a camera, the images showing a scene surrounding the AUV.

5. The control system of Claim 4, wherein, in the surface mode, the controller being configured to control the AUV to move based on the return signals comprises the controller being configured to generate a trajectory for the AUV using the waypoints and the scene, and to control the AUV to move using the trajectory.

6. The control system of any preceding claim, wherein the sensor is a SONAR transceiver configured to transmit SONAR pulses and receive return SONAR signals.

7. The control system of Claim 6, wherein, in the sub-surface mode, the controller being configured to control the AUV to move based on the return signals received when operating in the surface control mode comprises the controller being configured to control the AUV to move according to a predefined path.

8. The control system of any preceding claim, wherein the switch is configured to receive signal from a sensor of the AUV and switch between the surface controller and the sub-surface controller based on the signal received from the sensor.

9. The control system of Claim 9, wherein the sensor is a pressure sensor, wherein the switch is configured to switch from the surface control mode to the sub-surface control mode in response to pressure in the received signal equalling or exceeding a pressure threshold, and to switch from the sub-surface control mode to the surface control mode in response to pressure in the received signal being less than the pressure threshold.

10. The control system of any of Claims 1 to 8, wherein the switch is a manual switch.

11. The control system of any preceding claim, further comprising a console controller configured to receive an activation signal, to override the controller in response to receiving the activation signal, receive a navigation signal from the receiver, and control the AUV to move based on the navigation signal.

12. The control system of Claim 12, wherein, when overriding the controller when operating in the surface mode, the navigation signal and/or the activation signal, is a radio navigation signal.

13. The control system of Claim 13, wherein, when overriding the controller when operating in the sub-surface mode, the navigation signal and/or the activation signal is an acoustic signal.

14. An autonomous underwater vehicle, comprising:
a transmitter for transmitting periodic signals to a ground station;
a receiver for receiving signals from the ground station;
a sensor;
an actuator for moving the AUV; and
the control system of any preceding claim.
